# FASCICULE DE BREVET EUROPEEN

(11) **EP 3 237 545 B1**
(45) Date de publication et mention de la délivrance du brevet: **28.02.2024**
(21) Numéro de dépôt: 15817837.6
(22) Date de dépôt: 21.12.2015
(51) Int. Cl.: C08L 77/06, B29C 70/46, B29C 70/48, D06M 15/59, C08J 5/04

(54) **MELANGE DE POLYAMIDES A FLUIDITE AMELIOREE**
POLYAMIDMISCHUNG MIT VERBESSERTER FLIESSFÄHIGKEIT
POLYAMIDE MIXTURE HAVING IMPROVED FLUIDITY

(30) Priorité: 22.12.2014 FR 1463110
(43) Date de publication de la demande: 01.11.2017
(73) Titulaire: SPECIALTY OPERATIONS FRANCE, 69003 Lyon (FR)
(72) Inventeur: ORANGE, Gilles, 69390 Vourles (FR); PREBET, Christiane, 69440 Taluyers (FR); TUPINIER, Didier, 38150 Assieu (FR); JEOL, Stéphane, Cumming, GA 30041 (US)
(74) Mandataire: Cabinet Nony
(86) Numéro de dépôt international: PCT/EP2015/080856
(87) Numéro de publication internationale: WO 2016/102507

(56) Documents cités:
- WO-A1-2011/073200
- WO-A1-2013/187220
- JP-A- H06 220 320
- US-A1- 2010 215 920
- US-A1- 2012 190 785

## Description

La présente invention concerne le domaine des polymères thermoplastiques en particulier des polyamides, notamment utiles pour préparer des matériaux composites, élaborés *via* l'imprégnation d'une étoffe (matériau de renfort) par ces polyamides à l'état fondu.

Les matériaux composites à matrice thermoplastique constituent aujourd'hui des matériaux hautes performances pour les industries des marchés de masse comme les transports terrestres (automobile...), l'énergie, les sports et loisirs, les engins agricoles ou de travaux publics, ou des marchés plus limités mais en développement comme l'aéronautique. Ils possèdent en effet de bonnes performances mécaniques intrinsèques, notamment une ductilité, une tenue aux chocs, une bonne stabilité chimique, notamment aux solvants, et une recyclabilité totale.

Malheureusement, lors de la préparation des composites à base thermoplastique, une contrainte limitative au niveau du procédé est le taux d'imprégnation du renfort fibreux par le polymère à l'état fondu.

Pour optimiser ce taux d'imprégnation et ce avec des temps réduits diverses solutions ont été développées ces dernières années dont notamment celles consistant à utiliser des polymères dits à haute fluidité.

Ainsi, le développement de nouveaux polymères thermoplastiques à faible viscosité en fondu a permis d'accéder à une meilleure imprégnation des renforts fibreux (augmentation du taux de fibres, réduction des temps de cycle procédé).

Néanmoins, le niveau de viscosité de ces polymères demeure encore élevé pour certains procédés comme la consolidation en moule fermé sous faible pression (LCM) ou encore, pour des procédés continus comme l'injection-pultrusion.

De manière inattendue les inventeurs ont constaté que cette viscosité peut être diminuée sous réserve d'associer à ces polyamides, un polyamide distinct et bien spécifique.

Ainsi, selon un de ses aspects, la présente invention concerne une composition thermoplastique à fluidité améliorée à l'état fondu telle que décrite dans la revendication 1. Ladite composition comprend notamment au moins :
(a) un polyamide présentant une viscosité à l'état fondu, et
(b) un polyamide non évolutif présentant une viscosité en fondu inférieure à celle dudit polyamide (a) en fondu et doté d'une masse moléculaire moyenne en nombre Mn inférieure à celle dudit polyamide (a),
ladite composition présentant une viscosité en fondu, stabilisée à une valeur inférieure à la viscosité en fondu dudit polyamide (a).

Au sens de l'invention une viscosité stabilisée est une viscosité dont la valeur appréciée, à pression et température constantes sous atmosphère inerte, fluctue au plus de 25 %, voire au plus de 20 %, de préférence au plus de 10 %, préférentiellement au plus de 5 %, plus préférentiellement au plus de 2 %, avantageusement au plus de 1 % par rapport à sa valeur initiale sur une durée d'au moins 15 minutes, de préférence au moins 30 minutes.

Au sens de l'invention, par « valeur initiale », on entend la viscosité mesurée immédiatement après la formation d'un mélange homogène à l'état fondu.

Dans le présent texte, à des fins de simplification, les polyamides (a) et (b) pourront respectivement être dénommés polyamide « haute masse » ou polyamide (a) et polyamide « basse masse » ou polyamide (b).

L'expression « *polyamide* » est utilisée dans le présent texte pour désigner indifféremment un unique polyamide ou un mélange de polyamides.

Certes, les brevets US 6 548 591 et US 5 274 033, proposent déjà d'associer un polyamide de basse masse moléculaire à un polyamide de masse moléculaire élevée notamment à des fins d'accroissement de la fluidité du polyamide de haute masse moléculaire à l'état fondu. Toutefois, les polyamides de basse masse moléculaire considérés dans ces documents évoluent vers un accroissement de masse moléculaire dans les conditions de fabrication du matériau composite à base du mélange de polyamides à l'état fondu. Ils ne s'avèrent pas inertes et sont eux-mêmes sujets à un phénomène de polymérisation voire de condensation avec le polyamide de haute masse moléculaire. Ils ne sont donc plus présents sous leur forme d'origine dans le mélange mais sous la forme d'un polyamide de masse moléculaire élevée et donc de viscosité également accrue.

Pour leur part, les documents US 2009/0131569 et US 2009/0131674 proposent de mettre en oeuvre des oligomères non évolutifs à des fins d'améliorer la fluidité de matrices plastiques fondues. Ces oligomères, de par leur nature, présentent une masse moléculaire très faible, notamment autour de 2000 g/mole. Toutefois, la fluidité est dans ce cas obtenue au détriment des autres performances des matrices plastiques ainsi obtenues et en particulier de leurs propriétés mécaniques. En effet, de par leur faible taille, les oligomères migrent vers les surfaces et interfaces de la matrice affectant ainsi ses propriétés. Ce phénomène est particulièrement gênant dans le cadre de la fabrication de matériaux composites dans la mesure où les interfaces fibre-matrice doivent être dotées de hautes performances mécaniques (haut module, haute ténacité, adhésion/cohésion).

Contre toute attente, les inventeurs ont constaté que l'ensemble des inconvénients précités est en revanche surmonté avec un polyamide non évolutif tel que considéré selon l'invention.

Comme il ressort notamment des exemples ci-après, la composition de l'invention s'avère avantageuse à plusieurs titres.

Tout d'abord, l'utilisation d'une composition thermoplastique à fluidité améliorée permet une meilleure imprégnation du matériau de renfort, et donc l'obtention plus rapide d'articles composites dotés en outre d'une faible porosité. L'utilisation d'une telle composition permet également de réaliser des articles avec une haute teneur en fibres.

En outre, le fait que le polyamide « basse masse » soit introduit en faible quantité permet à l'article composite obtenu à partir de la composition de l'invention de conserver les propriétés mécaniques apportées par le polyamide « haute masse » qui sont généralement meilleures que celles du polyamide « basse masse » en termes de rigidité (module élastique E) et ténacité à la rupture (K1c, Gc).

Ainsi, selon l'invention, si l'utilisation d'un polymère « basse masse » non évolutif compatible avec un polyamide « haute masse » permet de réduire significativement la viscosité de ce dernier, il ne modifie pas pour autant certaines propriétés à l'état solide comme le module élastique E ou la ténacité à rupture. La présence de polymère « basse masse » en proportion réduite permet d'obtenir une fluidité nettement améliorée tout en conservant de bonnes performances mécaniques qui sont amenées essentiellement par le polymère « haute masse ». Il est ainsi possible d'obtenir un bon compromis fluidité/ténacité à rupture (Gc).

Selon un autre de ses aspects, la présente invention vise un procédé de fabrication d'un article composite comprenant au moins une étape d'imprégnation d'une étoffe de renfort avec une composition selon l'invention à l'état fondu.

Selon encore un autre de ses aspects, l'invention concerne un article composite obtenu par le procédé tel que défini ci-dessus.

L'invention a encore pour objet l'utilisation selon la revendication 13 d'un polyamide (b) non évolutif, à titre d'additif fluidifiant dans une composition à l'état fondu comprenant un polyamide (a) ; ledit polyamide (b) présentant une viscosité en fondu inférieure à celle dudit polyamide (a) en fondu et une masse moléculaire moyenne en nombre Mn inférieure à celle dudit polyamide (a).

Avantageusement, la quantité en composé (b) est ajustée pour diminuer la viscosité à l'état fondu de ladite composition l'incorporant à une valeur inférieure à 50 % de la viscosité à l'état fondu dudit polyamide (a), de préférence inférieure à 30 % de la viscosité à l'état fondu dudit polyamide (a), en particulier inférieure à 25 % de la viscosité à l'état fondu dudit polyamide (a).

Dans le cadre de la présente invention, toutes les viscosités exprimées à l'état fondu sont mesurées à l'aide d'un rhéomètre cône-plan de diamètre 25 mm sous azote, sous un balayage en cisaillement par palier allant de 10⁻¹ à 10² s⁻¹ à 100 % de déformation en mode dynamique avec un balayage continu en fréquence en conditions isothermes. Cette mesure est effectuée à une température supérieure à 10°C au-dessus du point de fusion (Tf) du matériau considéré si semi-cristallin, de préférence allant de 15°C à 30°C au-dessus de cette température, et à une température T allant de 80°C à 200°C, voire de 100°C à 200°C, au-dessus de sa température de transition vitreuse (Tg) si amorphe (avec T < 325°C), et pour une fréquence de 10 Hz. De préférence, les viscosités des polyamides « haute masse », si amorphes, sont mesurées dans la partie haute de la plage « +80°C à +200°C » mentionnée ci-dessus, par exemple de « +150°C à +200°C ». De préférence, les viscosités des polyamides « basse masse », si amorphes, sont mesurées dans la partie basse de la plage « +80°C à +200°C » mentionnée ci-dessus, par exemple de « +80°C à +150°C ».

Pour ce faire, le matériau considéré est introduit à l'état sec (RH = 0, RH pour *relative humidity*) sous forme de granulés ou de poudre broyée entre les plateaux du rhéomètre, puis fondu, de telle sorte à former un film liquide de 50 µm d'épaisseur sur lequel est alors réalisé la mesure.

Lorsque la mesure de viscosité concerne une composition selon l'invention, elle est réalisée sur un mélange homogène de cette composition.

Au sens de l'invention, le terme homogène qualifie une composition ou mélange dans lequel les deux polyamides (a) et (b) sont uniformément répartis. Il est ainsi garanti la même valeur de viscosité à l'état fondu en tout point du mélange.

### COMPOSITION SELON L'INVENTION

Comme il ressort de ce qui précède, les compositions selon l'invention sont tout particulièrement intéressantes au regard du fait qu'elles possèdent à l'état fondu deux populations distinctes de polyamides, la première population étant composée du ou des polyamide(s) « basse masse » et la deuxième, étant composée du ou des polyamide(s) « haute masse ». En conséquence, l'impact fluidifiant induit par la présence du polyamide dit de « basse masse » demeure avantageusement effectif durant l'intégralité du processus de transformation du polyamide « haute masse » à l'état fondu et permet ainsi d'optimiser le taux d'imprégnation du mélange sur par exemple une étoffe de renfort.

Cette préservation de la fonction fluidifiante du polyamide « basse masse » est en particulier révélée dans les exemples qui suivent. La viscosité du mélange n'évolue pas de manière significative au cours du temps, et demeure en outre avantageusement inférieure à celle du polyamide « haute masse » à l'état fondu.

En conséquence, une composition selon l'invention possède à l'état fondu une viscosité inférieure à la viscosité du polyamide ou mélange de polyamides (a) à l'état fondu qu'elle contient.

Avantageusement, la composition selon la présente invention possède une viscosité à l'état fondu inférieure à 50 % de la viscosité à l'état fondu dudit polyamide (a), de préférence inférieure à 30 % de la viscosité à l'état fondu dudit polyamide (a), en particulier inférieure à 25 % de la viscosité à l'état fondu dudit polyamide (a).

Comme énoncé précédemment, cette viscosité en fondu est en outre stabilisée.

En d'autres termes, elle évolue, et en particulier augmente, au plus de 25 %, voire au plus de 20 %, de préférence au plus de 10 %, préférentiellement au plus de 5 %, plus préférentiellement au plus de 2 %, avantageusement au plus de 1 % par rapport à sa valeur initiale sur une durée d'au moins 15 minutes, de préférence au moins 30 minutes à température et pression constantes sous atmosphère inerte, par exemple sous azote.

Cette viscosité est mesurée selon le protocole préalablement mentionné.

La composition conforme à l'invention comprend une teneur en polyamide (a) allant de 70 à 95 % en poids, en particulier de 80 à 95 % en poids, plus préférentiellement de 90 à 95 % en poids par rapport au poids total de la composition.

La composition conforme à l'invention comprend une teneur en polyamide (b) comprise entre 5 et 30 % en poids, en particulier entre 5 et 20 % en poids, notamment entre 5 et 12 % en poids, par rapport au poids total de la composition.
(a) Ainsi, une composition selon l'invention comprend de 70 à 95 % en poids de polyamide « haute masse » ;
(b) de 5 à 30 % en poids de polyamide « basse masse ».

En particulier, elle comprend :
(a) de 80 à 95 % en poids de polyamide « haute masse » ;
(b) de 5 à 20 % en poids de polyamide « basse masse ».

En particulier, elle comprend :
(a) de 80 à 95 % en poids de polyamide « haute masse » ;
(b) de 5 à 20 % en poids de polyamide « basse masse ».

De manière encore préférentielle, elle comprend :
(a) de 90 à 95 % en poids de polyamide « haute masse » ;
(b) de 5 à 10 % en poids de polyamide « basse masse ».

Le polyamide « haute masse » et le polyamide « basse masse » peuvent être présents au sein de la composition de l'invention dans un ratio polyamide (b) / polyamide (a) allant de 5/95 à 1/1, de préférence de 5/95 à 3/7, en particulier de 5/95 à 2/8 et encore plus préférentiellement de 5/95 à 1/9.

Comme énoncé précédemment, l'invention a pour avantage de conserver à l'état fondu les deux familles de polyamides (a) et (b) selon l'invention, et ce pendant un temps suffisant. Le phénomène de fluidification observé conduit à une chute importante de la viscosité, et ce même pour des taux faibles de polyamide (b) (par exemple 10 % en poids).

Comme énoncé précédemment, ces deux types de polyamides se distinguent de par leur viscosité différente, qui est également représentative d'une différence de masse moléculaire.

En particulier, le polyamide (a) peut présenter une masse moléculaire moyenne en nombre Mn supérieure ou égale à 8000 g/mol, de préférence à 8500 g/mol. De préférence, il présente une masse moléculaire moyenne en nombre comprise entre 8000 et 40000 g/mol, en particulier entre 8000 et 30000 g/mol et encore plus particulièrement entre 8500 et 25000 g/mol.

La masse moléculaire moyenne en poids Mw du polyamide (a) peut aller de 16000 g/mol à 70000 g/mol, en particulier de 16000 g/mol à 40000 g/mol.

En ce qui concerne le polyamide (b), en tout état de cause, il présente une masse moléculaire moyenne en nombre Mn inférieure à celle du polyamide (a). Il peut présenter une masse moléculaire moyenne en nombre allant de 5000 à 8500 g/mol, de préférence de 5000 à 8000 g/mol, et une masse moléculaire moyenne en poids Mw allant de 10000 g/mol à 17000 g/mol, de préférence de 10000 à 16000 g/mol, préférentiellement de 10000 à 15000 g/mol, en particulier de 10000 g/mol à 14000 g/mol.

Il est à noter que les masses moléculaires figurant à l'égard de ces polymères sont pour l'essentiel présentées à titre indicatif d'une échelle de poids. Il est à noter qu'une masse moléculaire spécifique peut être déterminée selon de nombreuses manières qui sont bien connues en soi de l'homme de l'art.

A titre illustratif de ces méthodes peuvent être citées notamment celle se fondant sur une analyse des groupes terminaux et en particulier, celle faisant appel à une mesure de chromatographie sur gel perméable (Gel Permeation Chromatographie GPC) appelée également chromatographie d'exclusion stérique (SEC). D'une manière générale, les mesures GPC d'un polyamide peuvent être réalisées dans le dichlorométhane (solvant et éluent), après modification chimique du polyamide afin de le solubiliser. Un détecteur UV est utilisé car le polyamide modifié chimiquement possède un chromophore UV. Le calcul de la distribution de masses ainsi que des masses moyennes Mn, et Mw peut être effectué en équivalents polystyrène (PST) ou masse absolue, après calibration par des étalons commerciaux. Si nécessaire, des mesures en masses absolues peuvent être réalisées, par détection viscosimétrique. Dans le cadre de la présente invention, les masses moléculaires moyennes Mn et Mw sont exprimées en masse absolue. Les Mn et Mw peuvent être calculées à partir de la totalité de la distribution ou après troncature des faibles masses si on ne souhaite pas prendre en compte la contribution des oligomères cycliques.

Selon une variante préférée, les polyamides (a) et (b) sont structurellement proches l'un de l'autre, voire, dérivent du même polyamide, le point de fusion du polyamide (b) étant de préférence inférieur ou égal à celui du polyamide (a).

### I. Polyamide « basse masse » (b)

Comme il ressort de ce qui précède, le polyamide « basse masse » est un polyamide non évolutif.

Par polyamide « non évolutif » au sens de l'invention, on entend un polyamide qui demeure inerte à l'état fondu. En d'autres termes, à l'état fondu, il n'est pour l'essentiel pas sujet à un phénomène de polymérisation ni de condensation avec d'autres composés annexes, en l'occurrence le polyamide « haute masse » qui lui est associé.

Cette quasi-inertie chimique se traduit notamment par la manifestation d'une valeur de viscosité stable à l'état fondu c'est-à-dire qui varie au plus de 25 %, voire au plus de 20 %, de préférence au plus de 10 %, préférentiellement au plus de 5 %, plus préférentiellement au plus de 2 %, sur une durée d'au moins 15 minutes, de préférence au moins 30 minutes à température et pression constantes sous atmosphère inerte (par exemple sous azote) comme indiqué ci-dessus.

Cette viscosité est mesurée selon le protocole détaillé précédemment.

En outre, comme mentionné précédemment, le polyamide (b) présente une viscosité à l'état fondu inférieure à celle du polyamide (a) et allant de 1 à 20 Pa.s.

Conviennent tout particulièrement à l'invention, les polyamides « basse masse » possédant un indice de viscosité IV variant de 80 à 48 mL/g à l'image par exemple de certains PA 66. Il est à noter que cet indice est généralement apprécié selon la norme ISO 307 dans l'acide formique.

Au sens de l'invention, le polyamide (b) n'est pas assimilable à un oligomère. En effet, les oligomères présentent une masse moléculaire moyenne en nombre inférieure à 5000 g/mol et se situe de manière générale autour de 2000 g/mol. Les oligomères, de par leur nature, présentent une viscosité en fondu au plus égale à 0,1 Pa.s lorsqu'elle est mesurée selon le protocole de l'invention. A contrario, comme énoncé précédemment, le polyamide (b) présente de préférence une masse moléculaire moyenne en nombre allant de 5000 à 8500 g/mol, en particulier de 5000 à 8000 g/mol.

Selon un premier mode de réalisation de l'invention, le polyamide (b) est non évolutif du fait d'une concentration faible en groupements terminaux réactifs.

Au sens de l'invention, l'expression « groupements terminaux réactifs » entend désigner les motifs amines et carboxyliques libres présents sur ledit polyamide.

Les quantités de groupements terminaux aminés (GTA) et/ou acides (GTC) peuvent être déterminées par dosage potentiométrique après complète dissolution du polyamide considéré, par exemple dans le trifluoroéthanol, et ajout d'une base forte en excès. Les espèces basiques sont alors titrées par une solution aqueuse d'acide fort.

Conviennent ainsi tout particulièrement à l'invention, les polyamides (b) présentant une concentration en groupements terminaux amines (GTA) et/ou en groupements terminaux carboxyliques (GTC) inférieure ou égale à 20 meq/kg, de préférence inférieure ou égale à 15 meq/kg, en particulier, inférieure ou égale à 10 meq/kg, encore plus préférentiellement inférieure ou égale à 5 meq/kg, tout particulièrement égale à 0 meq/kg.

A titre représentatif de ce type de polyamide (b) peuvent être cités ceux possédant :
- un GTA de 0 meq/kg et un GTC de 500 meq/kg ;
- un GTA de 400 meq/kg et un GTC de 0 meq/kg ;
- un(GTA) inférieure ou égale à 5 meq/kg, et un (GTC) comprise entre 100 et 1000 meq/kg ; et
- un (GTC) inférieure ou égale à 5 meq/kg, et un (GTA) comprise entre 100 et 1000 meq/kg.

De tels polyamides selon l'invention peuvent être fabriqués de nombreuses manières et sont bien connues en soit de l'homme de l'art. Le document WO 2010/034771 propose notamment des procédés pour préparer de tels polyamides. On peut par exemple fabriquer de tels polyamides par ajout en polymérisation, notamment au début en cours ou en fin de la polymérisation, des monomères du polyamide, en présence en outre de composés difonctionnels et/ou monofonctionnels spécifiques.

Ces composés difonctionnels et/ou monofonctionnels présentent des fonctions aminées ou acides carboxyliques capables de réagir avec les monomères du polyamide et sont utilisés dans des proportions telles que le polyamide résultant présente un GTA ou GTC conforme à l'invention.

Pour obtenir des polyamides « basse masse » selon ce mode de réalisation de l'invention en polymérisation, on peut notamment utiliser la relation DPn = (1 +r)/ (1 +r-2pr) dans laquelle DPn est le degré de polymérisation du polyamide, r est le rapport GTA/GTC ou GTC/GTA, inférieur à 1, introduits lors de la polymérisation et p correspond à l'avancement de la réaction.

II est également possible de mélanger à un polyamide des composés difonctionnels et/ou monofonctionnels, notamment par extrusion, généralement une extrusion réactive, de façon à obtenir un polyamide (b) conforme à la présente invention.

On peut utiliser tout type d'acides mono- ou di-carboxyliques, aliphatiques ou aromatiques ou tous types d'aminés mono- ou di-amines, aliphatiques ou aromatiques. On peut notamment utiliser comme composé monofonctionnel la n-dodécylamine et la 4-amino-2,2,6,6-tétraméthylpipéridine, l'acide acétique, l'acide laurique, la benzylamine, l'acide benzoïque et l'acide propionique. On peut notamment utiliser comme composé difonctionnel, l'acide adipique, l'acide téréphtalique, l'acide isophtalique, l'acide sébacique, l'acide azélaïque, l'acide dodécanedioïque, l'acide décanedioïque, l'acide pimélique, l'acide subéhque, les dimères d'acides gras, la di([beta]-éthylcarboxy) cyclohexanone, l'hexaméthylène diamine, la méthyl-5 pentaméthylène diamine, la métaxylylène diamine, la butanediamine, l'isophorone diamine, le 1,4-diamino cyclohexane, la 3, 3',5-triméthyl hexaméthylènediamine.

On peut également utiliser un excès d'acide adipique ou un excès d'hexaméthylène diamine pour la production d'un polyamide de type 66 présentant une fluidité en fondu élevée et une concentration en groupements terminaux aminés (GTA) ou en groupements terminaux carboxyliques (GTC) inférieure à 20 meq/kg.

Il est également possible de fortement diminuer les concentrations en groupements terminaux acides ou aminés d'un polyamide en opérant une finition sous vide en fin de polymérisation de manière à éliminer l'eau afin de consommer tout ou pratiquement tous les groupements terminaux et ainsi garantir que le polyamide n'évoluera plus dans le sens de l'augmentation de la masse moléculaire quelles que soient les conditions de mise en oeuvre du composite, notamment sous pression ou sous vide.

Selon un deuxième mode de réalisation de l'invention, le polyamide (b) est non évolutif du fait de la présence de bloqueurs de chaîne.

Par « bloqueur de chaîne », également appelé « molécule monofonctionnelle » ou « limiteur de chaîne », on désigne au sens de l'invention une molécule qui, par réaction avec les monomères du polyamide, engendre la formation d'une seule liaison covalente.

La fonction réactive du limiteur de chaîne peut être un acide carboxylique ou ses dérivés, comme le chlorure d'acyle, l'ester, l'amide, le diacide vicinal, l'anhydride d'acide, une amine, un aldéhyde, une cétone, un halogénure, un isocyanate, une urée, un alcool, un thiol. La molécule fonctionnelle peut en outre comporter un ou plusieurs hétéroatomes ne participant pas à la réaction avec les monomères du polyamide.

Selon ce mode de réalisation, une composition conforme à l'invention peut comprendre un polyamide (b) présentant :
- une concentration en groupements terminaux amines (GTA), supérieure ou égale à 25 meq/kg ;
- une concentration en groupements terminaux acide (GTC), supérieure ou égale à 25 meq/kg ; et
- une concentration en groupements terminaux bloqués (GTB), supérieure ou égale à 25 meq/kg.

Toujours selon ce deuxième mode de réalisation, les résines polyamides (b) selon l'invention peuvent présenter une concentration en groupements terminaux amine (GTA) supérieure ou égale à 25 meq/kg et préférentiellement inférieure ou égale à 220 meq/kg, plus préférentiellement supérieure ou égale à 30 meq/kg et inférieure ou égale à 150 meq/kg.

De tels polyamides peuvent présenter une concentration en groupements terminaux carboxylique (GTC) supérieure ou égale à 25 meq/kg et préférentiellement inférieure ou égale à 220 meq/kg, plus préférentiellement supérieure ou égale à 30 meq/kg et inférieure ou égale à 150 meq/kg.

De tels polyamides peuvent présenter une concentration en groupements terminaux bloqués (GTB) supérieure ou égale à 25 meq/kg et préférentiellement inférieure ou égale à 250 meq/kg, plus préférentiellement supérieure ou égale à 30 meq/kg et inférieure ou égale à 200 meq/kg.

Cette adéquation entre les quatre variables Mn, GTA, GTB et GTC peut être ajustée à l'aide de la relation suivante : Mn=2000000/(GTA+GTC+GTB) ; qui est bien familière de l'homme du métier. Un polyamide (b) convenable de masse moléculaire Mn=6000 g/mol peut ainsi présenter par exemple un GTA de 40 meq/kg, un GTC de 80 meq/kg et un GTB=213 meq/kg.

Ainsi, la quantité de limiteur de chaîne est calculée par le rapport entre la quantité molaire de limiteur de chaîne ajoutée et la masse de polymère produit. La quantité de limiteur de chaîne peut également être déterminée par hydrolyse du polyamide suivie d'une analyse par chromatographie liquide.

De tels polyamides selon l'invention peuvent être fabriqués de nombreuses manières et sont bien connues en soit de l'homme de l'art. Le document WO2011/073200 propose notamment des procédés pour préparer de tels polyamides.

On peut par exemple fabriquer de tels polyamides par ajout en polymérisation, notamment au début, en cours ou en fin de la polymérisation, des monomères du polyamide, en présence de composés monofonctionnels et éventuellement d'autres composés difonctionnels, notamment tels que définis pour le premier mode de réalisation, destinés à ajuster la stoechiométrie entre les fonctions réactives perturbée par l'ajout du composé monofonctionnel.

Il est également possible de mélanger à un polyamide, des composés monofonctionnels et éventuellement difonctionnels, notamment par extrusion, généralement une extrusion réactive, de façon à obtenir la résine polyamide utilisée selon la présente invention.

On peut également ajouter en outre des molécules polyfonctionnelles, comme la bishexaméthylène triamine par exemple.

Afin d'obtenir des concentrations en groupements terminaux acides et aminés d'un polyamide supérieures à 25 meq/kg, il n'est généralement pas nécessaire d'opérer une finition sous vide en fin de polymérisation.

### II. Polyamide « haute masse » (a)

Au sens de la présente invention, un polyamide « haute masse » est un polyamide possédant une viscosité à l'état fondu allant de 50 à 2000 Pa.s, de préférence de 60 à 800 Pa.s.

Cette valeur de viscosité, mesurée selon le protocole énoncé précédemment, est plus particulièrement représentative d'un polyamide possédant une masse moléculaire moyenne en nombre Mn supérieure ou égale à 8000 g/mol, de préférence à 8500 g/mol, en particulier comprise entre 8000 et 35000 g/mol, de préférence entre 8000 et 30000 g/mol, en particulier entre 8500 et 20000 g/mol.

Sous réserve des spécificités détaillées ci-dessus pour chacun des deux types de polyamide considérés dans une composition selon l'invention, ces polyamides (a) et (b) peuvent être obtenus selon des conditions opératoires classiques de polymérisation des polyamides, de manière continue ou discontinue.

Ainsi, les polyamides (a) et (b) convenant à l'invention peuvent indépendamment l'un de l'autre être aliphatiques ou semi-aromatiques, semi-cristallins ou amorphes.

Les polyamides (a) et (b) peuvent notamment être choisis indépendamment l'un de l'autre dans le groupe comprenant les polyamides obtenus par polycondensation d'au moins un diacide carboxylique aliphatique avec une diamine aliphatique ou cyclique ou entre au moins un diacide carboxylique aromatique et une diamine aliphatique ou aromatique, les polyamides obtenus par polycondensation d'au moins un aminoacide ou lactame sur lui-même, ou leur mélange et (co)polyamides.

Les polyamides de l'invention peuvent notamment être des polymères comprenant des chaînes macromoléculaires étoiles ou H, branché, ramifié, hyper-ramifié, et le cas échéant des chaînes macromoléculaires linéaires. Les polymères comprenant de telles chaînes macromoléculaires étoiles ou H sont par exemple décrits dans les documents FR2743077, FR2779730, US5959069, EP0632703, EP0682057 et EP0832149.

Les polyamides à structure étoile sont connus pour présenter une fluidité améliorée par rapport à des polyamides linéaires.

Les chaînes macromoléculaires étoiles comportent un coeur et au moins trois branches de polyamide. Les branches sont liées au coeur par une liaison covalente, par l'intermédiaire d'un groupement amide ou d'un groupement d'une autre nature. Le coeur est un composé chimique organique ou organométallique, de préférence un composé hydrocarboné comportant éventuellement des hétéroatomes et auquel sont reliées les branches. Les branches sont des chaînes polyamides. Les chaînes polyamides constituant les branches sont de préférence du type de celles obtenues par polymérisation des lactames ou aminoacides, par exemple de type polyamide 6. Le polyamide à structure étoile selon l'invention comprend éventuellement, outre les chaînes étoiles, des chaînes polyamide linéaires. Dans ce cas, le rapport en poids entre la quantité de chaînes étoiles et la somme des quantités de chaînes étoiles et de chaînes linéaires est compris entre 0,5 et 1 bornes incluses. Il est de préférence compris entre 0,6 et 0,9.

Ces polyamides à structure étoile, c'est-à-dire comprenant des chaînes macromoléculaires étoiles, peuvent être obtenus par copolymérisation d'un mélange de monomères comprenant au moins :
a) des monomères de formule générale I) suivante : 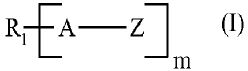
b) des monomères de formules générales (Ma) et (Mb) suivantes : 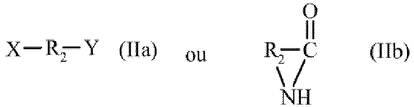
c) éventuellement des monomères de formule générale (III) ou (IV) suivante :

   Z-R₃-Z (III)

   ou

   R4-Z (IV)
dans lesquelles :
- Ri est un radical hydrocarboné comprenant au moins 2 atomes de carbone, linéaire ou cyclique, aromatique ou aliphatique et pouvant comprendre des hétéroatomes ;
- A est une liaison covalente ou un radical hydrocarboné aliphatique pouvant comprendre des hétéroatomes et comprenant de 1 à 20 atomes de carbone ;
- Z représente une fonction aminé primaire ou une fonction acide carboxylique ;
- Y est une fonction aminée primaire quand X représente une fonction acide carboxylique, ou Y est une fonction acide carboxylique quand X représente une fonction aminée primaire ;
- R₂, R₃, R₄ identiques ou différents représentent des radicaux hydrocarbonés aliphatiques, cycloaliphatiques ou aromatiques substitués ou non comprenant de 2 à 20 atomes de carbone et pouvant comprendre des hétéroatomes ; et
- m représente un nombre entier compris entre 3 et 8.

En particulier, le radical Ri est soit un radical cycloaliphatique tel que le radical tétravalent de cyclohexanonyle, soit un radical 1,1,1 -triyle-propane, 1,2,3-triyle-propane. Comme autres radicaux Ri convenables pour l'invention on peut citer à titre d'exemple, les radicaux trivalents de phényle et cyclohexanyle substitués ou non, les radicaux tétravalents de diaminopolyméthylène avec un nombre de groupes méthylène compris avantageusement entre 2 et 12 tels que le radical provenant de l'EDTA (acide éthylène diamino tétracétique), les radicaux octovalents de cyclohexanonyle ou cyclohexadinonyle, et les radicaux provenant de composés issus de la réaction des polyols tels que glycol, pentaérythritol, sorbitol ou mannitol avec l'acrylonitrile.

Ainsi, au moins deux radicaux R₂ différents peuvent être employés dans les monomères de formule (II).

Le radical A est, de préférence, un radical méthylénique ou polyméthylénique tel que les radicaux éthyle, propyle ou butyle ou un radical polyoxyalkylènique tel que le radical polyoxyéthylènique.

Le nombre m peut être par exemple supérieur ou égal à 3 et avantageusement égal à 3 ou 4. La fonction réactive du composé multifonctionnel représentée par le symbole Z est une fonction capable de former une fonction amide.

A titre de composé représentatif d'un composé de formule (I) peut notamment être cité la 2,2,6,6-tétra-(β-carboxyéthyl)-cyclohexanone, l'acide trimésique, la 2,4,6-tri-(acide aminocaproique)-1,3,5-triazine et la 4-aminoéthyle-1,8-octanediamine.

De tels procédés d'obtention de ces polyamides étoiles sont décrits dans les documents FR2743077 et FR2779730. Ces procédés conduisent à la formation de chaînes macromoléculaires étoiles, en mélange avec éventuellement des chaînes macromoléculaires linéaires. Si on utilise un comonomère de formule (III), la réaction de polymérisation est avantageusement effectuée jusqu'à l'atteinte de l'équilibre thermodynamique.

Les polyamides à structure étoile peuvent essentiellement être obtenus par mélange en fondu, par exemple à l'aide d'un dispositif d'extrusion, d'un polyamide du type de ceux obtenu par polymérisation des lactames et/ou des aminoacides et d'un monomère de formule (I).

De tels procédés d'obtention sont décrits dans les brevets EP0682070 et EP0672703.

Le mélange de monomères à l'origine des chaînes macromoléculaires étoiles peut comporter d'autres composés, tels que des limiteurs de chaînes, notamment dans le cadre de la préparation des polyamides (b) ou des catalyseurs.

Les polyamides (a) et (b) peuvent indépendamment l'un de l'autre également être des polymères de type arbre statistique, de préférence des copolyamides présentant une structure arbre statistique.

Ces copolyamides de structure arbre statistique ainsi que leur procédé d'obtention sont notamment décrits dans le document WO99/03909.

Les polyamides (a) et (b) de l'invention peuvent également comprendre indépendamment l'un de l'autre des motifs hydroxyaromatiques chimiquement liés à la chaîne du polyamide. On utilise pour ce faire un composé organique hydroxyaromatique qui est un composé comportant au moins un groupement hydroxyle aromatique et au moins une fonction capable de se lier chimiquement aux fonctions acides ou aminés du polyamide, qui une fois chimiquement lié à la chaîne polyamide, devient un motif hydroxyaromatique. Ce composé est de préférence choisi dans le groupe comprenant l'acide 2-hydroxytéréphtalique, l'acide 5-hydroxyisophtalique, l'acide 4-hydroxyisophtalique, l'acide 2,5-dihydroxytéréphtalique, l'acide 4-hydroxyphénylacétique ou l'acide gallique, la L-Tyrosine, l'acide 4-hydroxyphénylacétique, le 3,5-diaminophénol, le 5-hydroxy m-xylylène diamine, l'amino-3 phénol, l'amino-3 méthyl-4 phénol, et l'acide hydroxy-3 amino-5 benzoïque.

Les polyamides « basse masse » et « haute masse » de l'invention peuvent en particulier être choisis indépendamment l'un de l'autre dans le groupe comprenant les polyamides obtenus par polycondensation d'au moins un diacide carboxylique aliphatique avec une diamine aliphatique ou cyclique comme par exemple ceux représentatifs des familles PA 66, PA 6.10, PA 6.12, PA 12.12, PA 4.6, MXD 6 ou entre au moins un diacide carboxylique aromatique et une diamine aliphatique ou aromatique comme les polytéréphtalamides, polyisophtalamides, polyaramides, ou leur mélange et (co)polyamides. Le polyamide de l'invention peut aussi être choisi dans les polyamides obtenus par polycondensation d'au moins un aminoacide ou lactame sur lui-même, l'amino-acide pouvant être généré par l'ouverture hydrolytique d'un cycle lactame tels que, par exemple les familles référencées PA 6, PA 7, PA 9, PA 10T, PA 11, PA 12, PA 13, ou leur mélange et (co)polyamides. Les polyamides de l'invention peuvent aussi être choisis dans le groupe des polyamides obtenus par polycondensation de diacide, de diamine et d'aminoacide comme les copolyamides PA 6.6/6.

Les polyamides (a) et (b) peuvent notamment être choisis indépendamment l'un de l'autre parmi les familles référencées PA 6, PA 7, PA 10, PA 11, PA 12, PA 46, PA 66, PA 69, PA 610, PA 612, PA 9T, PA 10T, PA 4.6, PA 6.10, PA 6.12, PA 12.12, PA 6.66, MXD 6, PA 6TXT, PA 66/6T, PA 66/61, PA6T/6I, PA 6T/6I/66, PA 6.6/6.

La composition de l'invention peut également comprendre les copolyamides dérivés notamment des polyamides ci-dessus, ou les mélanges de ces polyamides ou copolyamides à titre de polyamide.

De préférence, les polyamides (a) et (b) sont choisis indépendamment l'un de l'autre parmi les familles référencées PA 66, PA 6.10, PA 6.12, PA 12.12, PA 4.6, MXD 6, PA 6, PA 7, PA 9T, PA 10T, PA 11, PA 12, PA 6T/6I, PA 6T/6I/66, les copolyamides en dérivant, et leurs mélanges.

La composition selon l'invention présente préférentiellement une teneur totale en polyamide allant de 85 à 100 % en poids, préférentiellement de 95 à 100 % en poids, par rapport au poids total de la composition.

La composition peut également comprendre, selon la propriété finale souhaitée, un ou plusieurs autres polymères, en présence d'agent compatibilisant ou non, tel que par exemple du polyéthylène, du polystyrène, de la résine ABS, du sulfure de polyphénylène, de l'oxyde de polyphénylène, du polyacétal, du polysulfone, de la polyéthersulfone, du polyétherimide, de la polyéthercétone, une résine de polysulfone, une résine élastomère éventuellement fonctionnalisée ou des mélanges de ceux-ci.

Une composition selon l'invention peut également comprendre tous les additifs habituellement utilisés dans les compositions à base de polymère thermoplastique et notamment utilisées dans le procédé de fabrication de composites.

Ainsi, la composition selon l'invention peut notamment comprendre à titre d'additifs au moins un plastifiant de type oligomère choisi parmi les oligomères d'ester cyclique(s), les oligomères d'éther, et leurs mélanges. Elle peut également comprendre au moins un antiplastifiant de type polymère phénolique.

De préférence, la composition de l'invention comprend à la fois un oligomère tel que mentionné ci-dessus et un polymère phénolique, ces deux derniers étant avantageusement présents dans un rapport pondéral polymère phénolique / oligomère variant de 0,25 à 6 de préférence d'environ 0,75 à 2,75.

En effet, l'ajout de ces deux additifs dans le ratio précité permet avantageusement de réduire encore la viscosité en fondu d'une composition polyamide.

A titre d'oligomère particulièrement préféré, on peut notamment citer les oligomères de polyester cycliques tel que le poly(butylène téréphtalate) (PBT) cyclisé ou les mélanges en contenant, tels que la résine CBT 100 commercialisée par CYCLICS CORPORATION par exemple.

De préférence, lorsque la composition comprend au moins un oligomère tel que mentionné ci-dessus à titre d'additif, ce dernier est présent dans une teneur allant de 1 à 10 % en poids par rapport au poids total de la composition.

A titre de polymère phénolique particulièrement préféré, on peut notamment citer les résines Novolac^{®}.

De préférence, lorsque la composition comprend au moins un polymère phénolique tel que mentionné ci-dessus à titre d'additif, ce dernier est présent dans une teneur allant de 1 à 15 % en poids par rapport au poids total de la composition.

Bien entendu, une composition selon l'invention peut également comprendre d'autres additifs.

On peut notamment citer à titre d'exemples d'additifs les stabilisants thermiques, plastifiants, antioxydants, lubrifiants, pigments, colorants, charges de renfort, agents modifiant la résistance aux chocs, agents nucléants, catalyseurs, stabilisants lumière et/ou thermique, antistatiques, matifiants, additifs d'aide au moulage et autres additifs conventionnels.

En ce qui concerne plus particulièrement les agents modifiants la résistance aux chocs, ce sont généralement des polymères d'élastomères. Les agents modificateurs de la ténacité sont généralement définis comme ayant un module de traction ASTM D-638 inférieur à environ 500 MPa. Des exemples d'élastomères convenables sont les éthylène-ester acrylique-anhydride maléique, les ethylène-propylène-anhydride maléique, les ethylène-propylène-diène momonère (EPDM) avec éventuellement un anhydride maléïque greffé. La concentration pondérale en élastomère est avantageusement comprise entre 0,1 et 30 % par rapport au poids total de la composition.

On préfère notamment les agents modificateurs de chocs comprenant des groupements fonctionnels réactifs avec les polymères thermoplastiques, en particulier avec les polyamides. On peut par exemple citer les terpolymères d'éthylène, ester acrylique et glycidyl méthacrylate, les copolymères d'éthylène et de butyl ester acrylate, les copolymères d'éthylène, n- butyl acrylate et glycidyl méthacrylate, les copolymères d'éthylène et d'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées. On peut citer également des agents type élastomère silicone (stress relief). La proportion en poids de ces agents dans la composition totale est notamment comprise entre 0,1 et 20 %.

Des additifs pour améliorer la qualité des interfaces étoffes de renfort polymère thermoplastique peuvent également être utilisés. Ces additifs peuvent être par exemple être incorporés à la composition.

De tels additifs peuvent par exemple être des agents de couplage tels que ceux de type aminosilanes ou chlorosilanes, ou encore des agents fluidifiants ou mouillants, ou leur association.

Des charges renforçantes peuvent être incorporées à la composition thermoplastique. Ces charges peuvent être choisies parmi les charges fibreuses, tels que des fibres de verre courtes par exemple, ou des charges non fibreuses tels que le kaolin, le talc, la silice, le mica ou la wollastonite. Leur taille est généralement comprise entre 0,8 et 15 µm. Des charges sub-microniques voire nanométriques peuvent également être utilisées, seules ou en complément des autres charges.

Ces charges et additifs sont ajoutés préférentiellement au polyamide `haute masse' avant de réaliser la composition thermoplastique finale par des moyens usuels adaptés à chaque charge ou additif, tel que par exemple lors de la polymérisation ou en mélange en fondu.

Les compositions de l'invention sont généralement obtenues par mélange des différents constituants à chaud, de préférence dans une extrudeuse (mono ou bivis) équipée de profil de vis adapté, à une température suffisante pour maintenir la matrice thermoplastique en milieu fondu. Généralement, le mélange obtenu est extrudé sous forme de joncs qui sont coupés en morceaux pour former des granulés. Les constituants de la composition sont de manière générale ajoutés ensemble. L'addition des additifs éventuels peut être réalisée par ajout de ces composés dans le mélange des polyamides (a) et (b) fondus, de façon préférentielle dans le polyamide haute masse (a).

### PROCEDE

Comme il ressort de ce qui précède, selon un de ses aspects, la présente invention concerne un procédé de fabrication d'un article composite comprenant au moins une étape d'imprégnation d'une étoffe de renfort avec une composition selon l'invention à l'état fondu.

On entend par étoffe, une surface textile de fils ou de fibres éventuellement solidarisés par un procédé quelconque, tel que notamment collage, feutrage, tressage, tissage, tricotage. Ces étoffes sont aussi désignées comme des réseaux fibreux ou filamenteux.

Par fil, on entend un monofilament, un fil multifilamentaire continu, un filé de fibres, obtenu à partir d'un unique type de fibres ou de plusieurs types de fibres en mélange intime. Le fil continu peut être également obtenu par assemblage de plusieurs fils multifilamentaires .

Par fibre, on entend un filament ou un ensemble de filaments coupés, craqués ou convertis.

Les fils et/ou fibres de renfort selon l'invention sont préférentiellement choisis parmi les fils et/ou les fibres de carbone, de verre, d'aramides, de polyimides, de lin, de chanvre, de sisal, de coir, de jute, de kenaf et/ou de leur mélange.

L'étape d'imprégnation de la composition thermoplastique de l'invention et de l'étoffe de renfort peut être réalisée de diverses manières, selon divers procédés possibles. Il est parfaitement possible de procéder à l'imprégnation d'une ou plusieurs étoffe(s) de renfort.

A titre d'exemples de procédés convenants à la présente invention on peut notamment citer les procédés de moulage, à l'image du moulage par injection, la pultrusion, comme par exemple la pultrusion-injection.

Lorsque la composition thermoplastique de l'invention possède une viscosité supérieure à 30 Pa.s, voire à 50 Pa.s, la fabrication de matériaux composites ne peut être réalisée qu'à l'aide de procédés dits indirects c'est-à-dire dans lesquels l'étoffe et la composition thermoplastique sont au préalable associées avant de réaliser l'étape d'imprégnation de l'étoffe de renfort.

A titre d'exemple de tel procédé, on peut notamment citer le procédé de consolidation sur presse à chaud (film stacking) suivi d'une étape de mise en forme comme l'estampage, avec éventuellement une étape finale de surmoulage.

Lorsque la composition thermoplastique de l'invention possède une faible viscosité, c'est-à-dire inférieure ou égale à 50 Pa.s, voire à 30 Pa.s, outre les procédés dits indirects tels que mentionnés ci-dessus, elle peut également être utilisée dans des procédés directs, c'est-à-dire la mettant directement en oeuvre à l'état fondu, à l'image du moulage par injection (LCM) et de la pultrusion, notamment par injection.

Pour ce type de compositions, les procédés directs sont préférés.

A titre de procédé de moulage par injection, on peut par exemple citer le procédé de moulage par transfert de résine (RTM). Ce procédé comprend l'injection de la composition thermoplastique en fondu dans un moule fermé comprenant au moins une ou plusieurs étoffes de renfort. L'intérieur du moule peut être à une température de plus ou moins 50°C par rapport à la température de fusion de la composition thermoplastique. On peut procéder ensuite au refroidissement du moule et de l'article obtenu, pour enfin récupérer ledit article. Ce procédé peut être réalisé sous pression.

Une variante de ce procédé appelé procédé C-RTM, aussi appelé injection compression peut également être utilisé dans la présente invention. Il se distingue du procédé RTM en ce que l'entrefer du moule est légèrement ouvert pendant l'injection de la composition à l'état fondu. La pièce est ensuite consolidée et mise à la cote par fermeture du moule, sous pression.

Après l'imprégnation de l'étoffe de renfort par le polyamide, l'article est obtenu par solidification de la matrice. Le refroidissement peut avantageusement être effectué rapidement de façon à éviter une cristallisation importante du polyamide, notamment pour maintenir les propriétés de l'article. Le refroidissement peut notamment être effectué en moins de 5 minutes, plus préférentiellement en moins d'une minute. Le moule peut par exemple être refroidi par un circuit de fluide froid. On peut aussi éventuellement transférer l'article composite dans un moule froid, éventuellement sous pression.

Comme mentionné ci-dessus, lorsque la viscosité de la composition thermoplastique est inférieure ou égale à 30 Pa.s, l'article composite de l'invention peut avantageusement être réalisé par pultrusion.

De manière préférée, un tel procédé de pultrusion est réalisé par injection, ce qui correspond alors à un procédé de pultrusion-injection.

La technique de pultrusion consiste à tirer à travers une filière chauffée un ou plusieurs fils et fibres continus de façon à l'imprégner d'une résine thermoplastique fondue pour obtenir un jonc ou article fini ou semi-fini.

Dans le procédé de pultrusion-injection, le polymère fondu est injecté au niveau de la filière chauffée à des fins d'imprégnation de l'étoffe de renfort également introduite dans cette filière.

### ARTICLE

La présente invention concerne également un article susceptible d'être obtenu par le procédé de l'invention. L'article peut notamment être un article composite à base de polyamide comprenant une étoffe de renfort.

Les articles selon l'invention comprennent préférentiellement entre 25 et 70 % en volume, en particulier entre 45 et 65 % en volume d'étoffe de renfort par rapport au volume total. Les articles composites présentent préférentiellement pour un taux de renfort de 50 % en volume d'une contrainte à la rupture supérieure à 450 MPa et un module élastique supérieur à 20 GPa dans le cas par exemple de renfort verre (pour un taux de vide compris typiquement entre 0 et 2 %). Les articles de l'invention peuvent être des articles finis, ou semi-finis pouvant aussi être appelés pré-imprégnés (pre-pregs). On peut par exemple procéder au thermoformage des articles composites sous forme de plaques pour leur donner une forme définie après refroidissement. L'invention concerne ainsi des articles composites susceptibles d'être obtenus par le procédé selon la présente invention.

Les articles de l'invention peuvent notamment être des profilés, lorsque le procédé de fabrication utilisé est un procédé de pultrusion.

Les articles de l'invention peuvent aussi être des structures de type sandwich présentant une âme insérée entre deux peaux. Les composites de l'invention peuvent être utilisés pour former les couches externes, en les associant à une âme type nid d'abeille ou type mousse. Les couches peuvent être assemblées par collage chimique ou thermique. Les structures composites selon l'invention peuvent être employées dans de nombreux domaines tels que l'aéronautique, l'automobile, l'énergie, l'industrie électrique, l'industrie des sports et loisirs. Ces structures peuvent être utilisées pour réaliser des articles de sports tels que des skis ou bien pour réaliser des surfaces diverses telles que des planchers spéciaux, des cloisons, des carrosseries de véhicules, ou des panneaux publicitaires. Dans l'aéronautique ces structures sont utilisées notamment au niveau des carénages (fuselage, aile, empennage). Dans l'automobile, elles sont utilisées par exemple au niveau des planchers, des supports tels que les blocs avant et arrière, ou encore au niveau de pièces de structure.

Dans la description et dans les exemples suivants, sauf indication contraire, les pourcentages sont des pourcentages en poids et les plages de valeurs libellées sous la forme « entre ... et ... » incluent les bornes inférieure et supérieure précisées.

Les exemples qui suivent sont présentés à titre illustratif et non limitatif du domaine de l'invention.

### EXEMPLES

### Protocoles et méthodes

Les viscosités en fondu des polyamides mis en oeuvre ont été mesurées à l'aide d'un rhéomètre RDA3 de Rheometrics (rhéomètre comportant un dispositif cône-plan de 25 mm) selon le protocole de mesure mentionné précédemment, à une température de 280°C.

Les masses moléculaires des polyamides ont été obtenues par mesure de chromatographie sur gel perméable (Gel Permeation Chromatographie GPC) appelé également chromatographie d'exclusion stérique (SEC). Les mesures GPC des PA66 sont réalisées dans le dichlorométhane (solvant et éluent), après modification chimique du polyamide afin de le solubiliser. Un détecteur UV est utilisé car le polyamide modifié chimiquement possède un chromophore UV. Le calcul de la distribution de masses ainsi que des masses moyennes Mn, et Mw est effectué en équivalents polystyrène, après calibration par des étalons commerciaux. Des mesures en masses absolues sont réalisées, par détection viscosimétrique. Mn et Mw peuvent être calculées à partir de la totalité de la distribution ou après troncature des faibles masses si on ne souhaite pas prendre en compte la contribution des oligomères cycliques.

### Exemple 1 : compositions thermoplastiques à base de PA66

Des compositions conformes à l'invention ou comparatives à base soit d'un polyamide de type PA66 STABAMID^{®} 22FE1 soit d'un polyamide de type PA66 STABAMID^{®} 26AE1 tous deux commercialisés par SOLVAY, en tant que polyamide (a) dont on cherche à réduire la viscosité, sont préparées.

Le polyamide PA66 STABAMID^{®} 22FE1 considéré seul en composition témoin 1 possède une température de fusion de 260°C, une viscosité en fondu de 68 Pa.s environ, et une masse moléculaire moyenne en nombre Mn de 8500 g/mol.

Le polyamide PA66 STABAMID^{®} 26AE1 considéré seul en composition témoin 2 possède une température de fusion de 262°C, une viscosité en fondu de 500 Pa.s environ, et une masse moléculaire moyenne en nombre Mn de 20400 g/mol.

Les compositions 1 à 9 ont été respectivement complémentées avec un composé annexe destiné à améliorer leur fluidité à l'état fondu.

Ces composés sont :
- soit un plastifiant, à savoir du poly(butylène téréphtalate) cyclisé (CBT 100 commercialisé par CYCLICS CORPORATION) (compositions comparatives 1, 2 et 7) ;
- soit un polyamide PA66 non évolutif, dit « basse masse » dénommé SHF51 (compositions 5, 6 et 9) ;
- soit du polyphénylène éther PPE (grade SA120 de Sabic, présentant une masse moléculaire Mn de 2300 g/mol) (compositions comparatives 3, 4 et 8) ;
dans les teneurs massiques indiquées dans le tableau 1 ci-dessous.

Le polyamide PA66 SHF51 « basse masse » possède une température de fusion de 262°C, une masse moléculaire moyenne en nombre Mn de 8650 g/mol (troncature 300 g/mol), une masse moléculaire moyenne en poids Mw de 14600 g/mol, une viscosité en fondu de 6 Pa.s environ et un indice de viscosité IV de 52,5 mL/g (déterminé dans l'acide formique à partir de l'ISO 307).

Il est obtenu par ajout en polymérisation d'acide acétique, et présente une teneur en GTA égale à 64,5 meq/kg , une teneur en GTC égale à 62 meq/kg, et une teneur en GTB égale à 198 meq/kg.

Le polyamide PA66 SHF51 est synthétisé selon un procédé standard de synthèse de polyamide 66 suivi d'une étape de finition durant 15 minutes. Le produit fondu est ensuite extrudé par la vanne de coulée et recueilli sur une plaque métallique sur laquelle il cristallise. Le polyamide cristallisé est broyé puis séché pour finalement obtenir une poudre prête à l'emploi.

Les compositions du tableau 1 suivant sont obtenues par mélange à l'état fondu des différents constituants par extrusion à l'aide d'un Microcompounder bivis (DSM) en batch : vitesse 100 rpm, temps de séjour de 4 minutes, à 280°C, sous balayage d'azote.

La viscosité des compositions est mesurée selon le même protocole que pour les polyamides.

Les résultats obtenus figurent dans le Tableau 1 ci-dessous.

**Tableau 1**

| | PA66 22FE1 (en % en poids) | PA66 26AE1 (en % en poids) | CBT 100 (en % en poids) | PA66 SHF51 (en % en poids) | PPE (en % en poids) | Viscosité (en Pa.s) |
|---|---|---|---|---|---|---|
| Témoin 1 | 100 | 0 | 0 | 0 | 0 | 68 |
| Composition 1 (hors invention) | 96 | 0 | 4 | 0 | 0 | 30 |
| Composition 2 (hors invention) | 80 | 0 | 20 | 0 | 0 | 45 |
| Composition 3 (hors invention) | 95 | 0 | 0 | 0 | 5 | 70 |
| Composition 4 (hors invention) | 90 | 0 | 0 | 0 | 10 | 70 |
| Composition 5 (conforme) | 90 | 0 | 0 | 10 | 0 | 22 |
| Composition 6 (conforme) | 95 | 0 | 0 | 5 | 0 | 28 |
| Témoin 2 | 0 | 100 | 0 | 0 | 0 | 500 |
| Composition 7 (hors invention) | 0 | 96 | 4 | 0 | 0 | 500 |
| Composition 8 (hors invention) | 0 | 90 | 0 | 0 | 10 | 700 |
| Composition 9 (conforme) | 0 | 90 | 0 | 10 | 0 | 200 |

Ces résultats mettent en exergue que l'utilisation d'un polymère (b) non évolutif compatible avec un polyamide (a) permet de réduire significativement la viscosité de ce dernier.

En effet, le tableau ci-dessus montre que la présence de 5 à 10 % en poids de polyamide PA66 SHF51, permet de réduire la viscosité du polyamide PA66 22FE1 ou du polyamide PA66 26AE1 d'environ 60 à 70 % (voir compositions 5, 6 et 9). Il est en outre à noter que la viscosité de ces compositions comprenant le polyamide PA66 SHF51 reste stable même après maintien à l'état fondu pendant au moins 15 minutes, voir au moins 30 minutes (sous azote), ce qui prouve l'absence de réaction (condensation) entre les deux polymères.

A l'inverse, l'ajout d'un polymère comme le polymère thermoplastique PPE basse masse ne permet pas de fluidifier un tel polyamide (voir compositions 1 à 4, 7 et 8). Le plastifiant CBT100 permet de diminuer sensiblement la viscosité de la composition, mais de façon instable (augmentation dans le temps du niveau de viscosité).

### Exemple 2 : Effet des conditions de mélange sur le comportement de la composition thermoplastique à fluidité améliorée

Des essais ont été réalisés par mélange en extrusion avec différents temps de séjour à l'état fondu afin de confirmer la fluidité améliorée de compositions thermoplastiques comprenant au moins un mélange de polyamide de masse moléculaire différente.

Les essais ont été réalisés à l'aide d'une extrudeuse bi-vis Leistritz type ZSE 18 MAAX (diamètre vis 18mm, longueur 44D). Les conditions de débit matière (kg/h) et de vitesse de rotation des vis (rpm) ont été définies afin d'obtenir un temps de séjour variant entre 30 secondes et 105 secondes. Un temps de séjour moyen pour la fabrication de polymère formulé (compound) est typiquement de l'ordre de 1 minute.

Les polymères utilisés sont le PA66 26AE2, et le PA66 SHF51 (décrit ci-dessus).

Le polyamide PA66 STABAMID^{®} 26AE2 commercialisé par SOLVAY, considéré seul possède avant extrusion une température de fusion de 261°C, une viscosité en fondu de 425 Pa.s environ (T = 280°C et 10 radis), et une masse moléculaire moyenne en nombre Mn de 18255 g/mol (troncature 5000 g/mol).

Les essais réalisés ont considéré une seule composition basée sur un mélange 80 % 26AE2 + 20 % SHF51 ( % poids) avec différents temps de séjour TDS allant de 30 secondes à 105 secondes en fonction du débit matière Q (kg/h) et de la vitesse de rotation de l'extrudeuse n (rpm). Les polymères sont utilisés sous forme de granulés, à l'état sec (séchage 12h, 100°C sous vide).

La viscosité des compositions est mesurée à 280°C en utilisant un rhéomètre ARES avec un balayage en fréquence des hautes vers les basses fréquences. La valeur de viscosité est prise à 10 radis après un séchage sous vide à 110°C.

Les résultats obtenus figurent dans le Tableau 2 ci-dessous.

**Tableau 2 : effet conditions de mélange (compositions thermoplastiques base de PA66)**

| | Débit Q (kg/h) | Vitesse n (rpm) | Q/n | Temps de Séjour TDS (s) | Viscosité (Pa.s) | GTC meq/kg | GTA meq/kg | IV mL/g |
|---|---|---|---|---|---|---|---|---|
| Témoin 1 (26AE2) | 6 | 700 | 0,009 | 45 (témoin) | 420 | - | - | 135 |
| Témoin 2 (SHF51) | 6 | 700 | 0,009 | 45 (témoin) | 5 | - | - | 51 |
| Essai 1 | 3 | 300 | 0,01 | 105 | 175 | 73,7 | 41,8 | 116,4 |
| Essai 2 | 3 | 700 | 0,004 | 90 | 177 | 72,1 | 41,5 | 114,7 |
| Essai 3 | 3 | 1100 | 0,003 | 75 | 155 | 70,3 | 44,2 | 112,8 |
| Essai 4 | 6 | 300 | 0,02 | 50 | 150 | 74,3 | 42,7 | 115,0 |
| Essai 5 | 6 | 700 | 0,009 | 45 | 153 | 74,5 | 42,8 | 114,0 |
| Essai 6 | 6 | 1100 | 0,005 | 40 | 135 | 73,3 | 44,3 | 110,5 |
| Essai 7 | 9 | 300 | 0,003 | 30 | 138 | 75,4 | 42,3 | 113,6 |
| Essai 8 | 9 | 700 | 0,013 | 30 | 140 | 79,0 | 45,0 | 115,3 |
| Essai 9 | 9 | 1100 | 0,008 | 30 | 200 | 75,7 | 42,3 | 112,5 |

Ces résultats montrent que l'utilisation d'un polymère (b) non évolutif à masse réduite avec un polyamide (a) de masse plus élevée permet de réduire significativement la viscosité de ce dernier ; le niveau de viscosité obtenu est très faiblement dépendant du temps de séjour dans l'extrudeuse.

Il est en outre à noter que les viscosités de la composition comprenant le polyamide PA66 SHF51 restent stables même après maintien à l'état fondu dans le rhéomètre pendant 15 minutes (sous azote).

En outre, des dosages en groupements terminaux amine et acide du polyamide ont été effectués dans les compositions obtenues.

La mesure est effectuée par dosage potentiométrique en retour des groupements terminaux amines et carboxyliques du polyamide. On alcalinise toutes les fonctions par ajout de 8 ml d'hydroxyde de tétrabutylammonium à 0.05N puis on dose par l'acide chlorhydrique à 0.05N dans le méthanol. Solvant de dissolution à base mélange de TFE (Solvay) 77 % et chloroforme (Normapur) 23 %.

La chaîne potentiométrique est validée sur un témoin (acide aminocaproïque 7470 < GTC, et GTA < 7650 en meq/kg). Les mesures sont faites sur un ensemble potentiométrique Metrohm.

Les mesures effectuées sur les échantillons issus des essais 1 à 9 (Tableau 2) montrent que la somme des GT est relativement stable avec le temps de séjour TDS (compte tenu de la précision sur les mesures).

Des mesures d'indice de viscosité IV (selon norme ISO 307) ont également été effectuées : les résultats obtenus montrent que l'IV est relativement stable avec le temps de séjour TDS (compte tenu de la précision des mesures).

### Exemple 3 : Propriétés mécaniques de composition à base mélange de polyamides - Ténacité à la rupture K1c

Une composition à base de polyamide PA66 22FE1 (décrit ci-dessus) et de PA66SHF51 (décrit ci-dessus) a été préparée par mélange en extrudeuse bi-vis : mélange 65 % 22FE1 + 35 % SHF51 ( % en poids).

Des barreaux ont été injectés à partir des granulés obtenus avec l'extrudeuse, afin d'obtenir des éprouvettes pour essais mécaniques.

Une propriété critique vis-à-vis des masses moléculaires des polymères est la résistance à la fissuration, appelée ténacité à la rupture. En mode d'ouverture (mode I), la résistance à la fissuration ou ténacité est représentée par le facteur critique d'intensité de contrainte K1c (ou énergie G1c).

Les mesures sont réalisées selon la norme ISO 13586 : réalisation d'entaille au niveau des éprouvettes, puis essais mécaniques de type flexion 3 points à l'état sec (RH = 0) (séchage 12h, 100°C sous vide).

Les valeurs obtenues sont rapportées dans le Tableau 3 suivant.

**Tableau 3 : propriétés mécaniques (compositions thermoplastiques à base de PA66)**

| | Viscosité (Pa.s) | Module E (GPa) | Ténacité K1c (MPa.m1/2) |
|---|---|---|---|
| Témoin 1 (22FE1) | 70 | 3,8 | 3,5 |
| Témoin 2 (SHF51) | 5 | 3,75 | 1,6 |
| Composition 65/35 | 20 | 3,8 | 3,5 |

Ces résultats montrent que si l'utilisation d'un polymère « basse masse » non évolutif compatible avec un polyamide « haute masse » permet de réduire significativement la viscosité de ce dernier, il ne modifie pas pour autant certaines propriétés à l'état solide comme le module élastique E ou la ténacité à rupture (K1c, ou Gc). La présence de polymère « basse masse » en proportion réduite permet d'obtenir une fluidité nettement améliorée tout en conservant de bonnes performances mécaniques qui sont amenées essentiellement par le polymère « haute masse ». Il est ainsi possible d'obtenir un bon compromis fluidité/ténacité à rupture (Gc).

### Exemple 4 : Comportement au mouillage de composition à base mélange de polyamides - Interface polymère/verre.

Une composition à base de polyamide PA66 22FE1 (décrit ci-dessus) et de PA66SHF51 (décrit ci-dessus) a été préparée par mélange en extrudeuse bi-vis : mélange 70 % 22FE1 + 30 % SHF51 ( % en poids).

Les granulés obtenus ont été séchés 12h à 100°C sous vide.

Le mouillage à l'état fondu a été mesuré pour le PA66 22FE1, le PA66 SHF51 et la composition 70/30. Des lames de verre ont été préparées : nettoyage/dégraissage de la surface par traitement alcool/acétone puis activation de la surface (silanols SiOH) par traitement via une solution H₂O₂ (30 %)/H₂SO₄ (70 %).

Le mouillage du polymère à l'état fondu est mesuré au travers de l'angle θ obtenu par un granulé déposé sur une lame de verre et porté à 290°C. Les mesures ont été faites en température avec un tensiomètre Kruss DSA100, sous argon.

Les valeurs obtenues après un temps de stabilisation de 150 secondes sont rapportées dans le Tableau 4 suivant.

**Tableau 4 : mouillage à chaud (compositions thermoplastiques à base de PA66)**

| | Viscosité (Pa.s) | Angle θ (°) |
|---|---|---|
| Témoin 1 (22FE1) | 70 | 72 |
| Témoin 2 (SHF51) | 5 | 64 |
| Composition 70/30 | 22 | 51 |

Ces résultats montrent que si l'utilisation d'un polymère « basse masse » non évolutif compatible avec un polyamide « haute masse » permet de réduire significativement la viscosité de ce dernier, il permet également d'améliorer de façon notable le mouillage vis-à-vis d'une surface de verre. Il est ainsi possible d'obtenir des interfaces de bonne qualité avec ces compositions.

### Exemple 5 : Préparation d'un composite avec tissu équilibré (satin)

La composition thermoplastique 5 de l'exemple 1 (Tableau 1) est utilisée dans cet exemple pour la préparation d'un composite.

L'étoffe de renfort utilisée est un tissu de fibre de verre de satin de 8 présentant un grammage de 500 g/m².

La composition thermoplastique considérée est utilisée sous forme de poudre. Les poudres sont obtenues par broyage cryogénique, soit dans la carboglace, soit dans l'azote liquide.

La réalisation des pièces composites est faite au moyen d'une presse hydraulique à double plateaux contrôlés en température Schwabenthan (Polystat 300A) : plateaux chauffants (résistances chauffantes), et plateaux refroidis (circulation d'eau). Un moule métallique dotée d'une empreinte de dimensions 150 mm x 150 mm ou 200 mm x 300 mm est utilisé.

Pour réaliser un composite contenant 60 % en volume de fibres de verre avec le tissu de grammage 500 g/m², on introduit entre les plateaux un cadre métallique dans lequel on place une préforme constituée d'un empilement alterné comprenant 6 feuilles de tissus de verre et entre chaque de la poudre uniformément répartie, les deux couches externes étant des feuilles de tissus de verre.

La température des plateaux de la presse est préalablement montée à 275°C (dans le cas du PA66) avant l'introduction de la préforme. A cette température, la pression est appliquée entre 1 et 20 bar et maintenue à cette valeur ; éventuellement des dégazages peuvent être rapidement effectués. L'ensemble est maintenu à la même température et pression, sans dégazage, pendant un temps suffisant pour avoir une bonne imprégnation (stabilisation de la pression et de la distance entre plateaux). Le moule est alors transféré sur le dispositif plateaux refroidis et maintenu à une pression comprise entre 1 et 5 bar pendant une durée inférieure à 5 minutes.

La durée du cycle est supérieure à 10 minutes pour des viscosités au-dessus de 250 Pa.s ; elle est réduite à 10 minutes environ pour des viscosités entre 250 et 70 Pa.s ; enfin pour des faibles viscosités (inférieures à 50 Pa.s), la durée du cycle devient inférieure à 5 minutes.

Les pièces composites ainsi obtenues ont une dimension de 150 mm x 150 mm ou 200 mm x 300 mm et une épaisseur de 2 mm environ.

La présence de polymère `basse masse' en faible proportion permet d'obtenir une fluidité nettement améliorée tout en conservant de bonnes performances mécaniques qui sont amenées essentiellement par le polymère de masse plus élevée. Il est ainsi possible d'obtenir un bon compromis fluidité/ténacité à rupture (Gc).

De plus, la présence de polymère basse masse procure à la composition une excellente mouillabilité à chaud sur tissu (tissu chaud). Ceci permet de contribuer à l'obtention d'un bon niveau de cohésion interfaciale entre le polymère et les fibres du renfort.

La très faible viscosité des compositions thermoplastiques selon l'invention permet ainsi une excellente consolidation (taux de vide : 0,1 %), pour un taux volumique de fibres de 60 % et un temps de cycle court (inférieur à 5 minutes).

Le taux de vide est mesuré par pesée (Norme ASTM D2734-94), et éventuellement contrôlé par observation en microscopie électronique à balayage (MEB) pour des taux faibles.

Le temps de cycle correspond à la durée totale entre la mise en température du moule et le refroidissement sous pression.

### Exemple 6 : Préparation d'un composite avec renfort type unidirectionnel tissé

Un mélange de polymère à partir de polyamide PA66 STABAMID 22FE1 (décrit ci-dessus) et de PA66 SHF51 « basse masse » (décrit ci-dessus) a été réalisé à l'aide d'une extrudeuse bi-vis Leistritz type ZSE 18 MAAX (diamètre vis 18mm, longueur 44D), et des conditions débit matière (kg/h) et vitesse de rotation des vis (rpm) conduisant à un temps de séjour de moins de 1 min. Le ratio utilisé est 70 % PA66 22FE1, et 30 % PA66 SHF51.

La composition thermoplastique ainsi obtenue est utilisée dans cet exemple pour la préparation de plaque composite (stratifié).

L'étoffe de renfort utilisée est un tissu de fibre de verre de type unidirectionel tissé à haut module, constitué de mèche à 0° (chaîne : 1200 tex), d'un fil espaceur chaîne (136 tex) et d'un fil à 90° (trame : 70 tex) avec une distance entre fil de trame de 5mm, et présentant un grammage global de 520 g/m².

La composition thermoplastique considérée est utilisée sous forme de poudre. Les poudres sont obtenues par broyage cryogénique, soit dans la carboglace, soit dans l'azote liquide, puis séchage (RH = 0).

La réalisation des pièces composites est faite au moyen d'une presse hydraulique à plateaux contrôlés en température Pinette Emidecau (PEI Lab 600 kN) : plateaux chauffés (résistances chauffantes) / refroidis (circulation d'air-eau) de façon contrôlée. Un moule métallique dotée d'une empreinte de dimensions 450 mm x 500 mm est utilisé.

Pour réaliser un composite contenant 55 % en volume de fibres de verre avec le tissu de grammage 500 g/m², on introduit entre les plateaux un cadre métallique dans lequel on place une préforme constituée d'un empilement alterné comprenant 8 plis de tissus de verre et entre chaque de la poudre uniformément répartie. Le nombre de plis est adapté afin de faire varier le taux de fibres : 45 %, 50 % et 55 % vol.

La température des plateaux de la presse est préalablement montée à 265°C avant l'introduction de la préforme. A cette température, la pression est appliquée progressivement de façon contrôlée entre 1 et 3,5 bar et maintenue à cette valeur pendant que la température est amenée de façon contrôlée à 280°C. L'ensemble est maintenu à la même température et pression, sans dégazage, pendant 2min 30 secondes afin d'avoir une bonne imprégnation (stabilisation de la pression et de la distance entre plateaux). L'ensemble sous pression est alors refroidi à 5°C/min puis 20°C/min. jusqu'à une température de 80°C pour le démoulage.

Les pièces composites ainsi obtenues ont une dimension de 500x450 mm et une épaisseur de 3,4 mm environ.

La très faible viscosité de la composition thermoplastique selon l'invention permet d' obtenir une excellente consolidation (taux de vide : 0,1 %), pour un taux volumique de fibres de 55 % et un temps de cycle court (inférieur à 4 minutes).

A titre de comparaison (Témoin), des plaques composites ont été réalisées avec le même protocole en utilisant le polymère PA66 22FE1.

Les propriétés mécaniques sont mesurées sur échantillon découpés dans les plaques, l'axe 0° correspondant au sens des mèches chaîne des unidirectionels tissés HM, selon la norme NF EN ISO 5274. Le taux de vides (densité) est mesuré selon la norme ASTM D2734-94.

Le taux de fibre effectif a été mesuré par calcination : il est de 54 %vol. pour 55 % visé, 48 % vol. pour 50 % visé et 43 % vol. pour 45 % visé.

Les valeurs obtenues sont rapportées dans le Tableau 5 suivant.

**Tableau 5 : performances mécaniques de composites stratifiés base compositions thermoplastiques (PA66)**

| | Taux fibres : 43 % vol. | | Taux fibres : 48 % vol. | | Taux fibres : 54 % vol. | |
|---|---|---|---|---|---|---|
| | Module E (GPa) | Contrainte à Rupture (MPa) | Module E (GPa) | Contrainte à Rupture (MPa) | Module E (GPa) | Contrainte à Rupture (MPa) |
| Composite Témoin (base 22FE1) | 32,5 | 515 | 38 | 580 | 42 | 635 |
| Composite selon invention (base Composition 70/30) | 33,5 | 620 | 39,1 | 650 | 42,9 | 705 |

Ces résultats montrent que l'utilisation d'un polymère « basse masse » non évolutif compatible avec un polyamide « haute masse » permet d'améliorer sensiblement les propriétés de composites stratifiés par rapport à l'utilisation du seul polyamide « haute masse ». Ce gain de propriété est lié à une meilleure imprégnation des renforts et une meilleure qualité d'interface.

## Revendications

1. Composition thermoplastique à fluidité améliorée à l'état fondu, utile pour l'imprégnation d'une étoffe de renfort dans la fabrication d'un article composite, comprenant au moins :
(a) un polyamide présentant une viscosité à l'état fondu allant de 50 à 2000 Pa.s, et
(b) un polyamide non évolutif présentant une viscosité en fondu inférieure à celle dudit polyamide (a) en fondu, allant de 1 à 20 Pa.s, et doté d'une masse moléculaire moyenne en nombre Mn, déterminée par chromatographie sur gel perméable (GPC), exprimée en masse absolue à partir de la totalité de la distribution de masses, inférieure à celle dudit polyamide (a),
ledit polyamide non évolutif demeurant inerte à l'état fondu, autrement dit n'étant pour l'essentiel pas sujet à un phénomène de polymérisation ni de condensation avec les autres composés de la composition thermoplastique, en particulier avec ledit polyamide (a), de sorte que la valeur de la viscosité stabilisée de la composition thermoplastique à l'état fondu varie au plus de 25 %, voire au plus de 20 %, de préférence au plus de 10 %, préférentiellement au plus de 5 %, plus préférentiellement au plus de 2 %, par rapport à sa valeur initiale, sur une durée d'au moins 15 minutes, de préférence d'au moins 30 minutes, à température et pression constantes sous atmosphère inerte ;
ladite composition présentant une viscosité en fondu, stabilisée à une valeur inférieure à la viscosité en fondu dudit polyamide (a), la viscosité à l'état fondu étant déterminée suivant le protocole décrit dans la description,
ledit polyamide (b) présentant :
- une concentration en groupements terminaux amines (GTA) et/ou en groupements terminaux carboxyliques (GTC) inférieure ou égale à 20 meq/kg, ou
- une concentration en groupements terminaux amines (GTA), supérieure ou égale à 25 meq/kg ; une concentration en groupements terminaux acide (GTC), supérieure ou égale à 25 meq/kg ; et une concentration en groupements terminaux bloqués (GTB), supérieure ou égale à 25 meq/kg telle que ledit polyamide (b) est non évolutif du fait de la présence desdits groupes terminaux bloqués ;
- les concentrations en groupements terminaux amines (GTA) et en groupements terminaux carboxyliques (GTC) étant déterminées par dosage potentiométrique après complète dissolution du polyamide, par exemple dans le trifluoroéthanol, et ajout d'une base forte en excès, puis titrage des espèces basiques par une solution aqueuse d'acide fort ; la concentration en groupements terminaux bloqués étant calculée par le rapport entre la quantité molaire de limiteur de chaîne ajoutée et la masse de polyamide produit ;
ladite composition comprenant de 70 à 95 % en poids de polyamide (a) et de 5 à 30 % en poids de polyamide (b), par rapport au poids total de la composition.

2. Composition selon la revendication 1, dans laquelle la teneur en polyamide (b) est de 5 et 20 % en poids, et plus préférentiellement de 5 à 12 % en poids, par rapport au poids total de la composition.

3. Composition selon l'une quelconque des revendications précédentes, dans laquelle les polyamides (a) et (b) dérivent du même polyamide, le point de fusion du polyamide (b) étant de préférence inférieur ou égal à celui du polyamide (a).

4. Composition selon l'une quelconque des revendications précédentes possédant une viscosité à l'état fondu inférieure à 50 % de la viscosité à l'état fondu dudit polyamide (a), de préférence inférieure à 30 % de la viscosité à l'état fondu dudit polyamide (a), en particulier inférieure à 25 % de la viscosité à l'état fondu dudit polyamide (a).

5. Composition selon l'une quelconque des revendications précédentes possédant une viscosité en fondue qui évolue, et en particulier augmente, au plus de 25 %, voire au plus de 20 %, de préférence au plus de 10 %, préférentiellement au plus de 5 %, plus préférentiellement au plus de 2 %, avantageusement au plus de 1 % par rapport à sa valeur initiale sur une durée d'au moins 15 minutes, de préférence au moins 30 minutes à température et pression constantes sous atmosphère inerte, par exemple sous azote.

6. Composition selon l'une quelconque des revendications précédentes, dans laquelle ledit polyamide (b) présente une concentration en groupements terminaux amines (GTA) et/ou en groupements terminaux carboxyliques (GTC) inférieure ou égale à 15 meq/kg, en particulier, inférieure ou égale à 10 meq/kg, encore plus préférentiellement inférieure ou égale à 5 meq/kg, tout particulièrement égale à 0 meq/kg.

7. Composition selon l'une quelconque des revendications précédentes, ledit polyamide (b) présentant une masse moléculaire moyenne en nombre Mn, déterminée par chromatographie par perméation de gel (GPC), comprise entre 5000 et 8500 g/mol.

8. Composition selon l'une quelconque des revendications précédentes, ledit polyamide (a) présentant une viscosité à l'état fondu allant 60 à 800 Pa.s.

9. Composition selon l'une quelconque des revendications précédentes, dans laquelle lesdits polyamides (a) et (b) sont choisis indépendamment l'un de l'autre parmi les polyamides dérivant de la polycondensation d'au moins un diacide carboxylique aliphatique avec une diamine aliphatique ou cyclique, les polyamides par polycondensation d'au moins un diacide carboxylique aromatique et une diamine aliphatique ou aromatique, les polyamides obtenus par polycondensation d'au moins un aminoacide ou lactame sur lui-même, ou leurs mélanges et (co)polyamides, et de préférence lesdits polyamides (a) et (b) sont choisis indépendamment l'un de l'autre parmi les familles référencées PA 66, PA 6.10, PA 6.12, PA 12.12, PA 4.6, MXD 6, PA 6, PA 7, PA 9T, PA 10T, PA 11, PA 12, PA 6T/6I, PA 6T/6I/66, les copolyamides en dérivant, et leurs mélanges.

10. Composition selon l'une quelconque des revendications précédentes, lesdits polyamides (a) et (b) comprenant indépendamment l'un de l'autre des motifs hydroxyaromatiques chimiquement liés à la chaîne du polyamide.

11. Procédé de fabrication d'un article composite comprenant au moins une étape d'imprégnation d'une étoffe de renfort avec une composition selon l'une quelconque des revendications 1 à 10 à l'état fondu.

12. Article composite obtenu par le procédé selon la revendication 11.

13. Utilisation d'un polyamide (b) non évolutif, à titre d'additif fluidifiant dans une composition à l'état fondu utile pour l'imprégnation d'une étoffe de renfort dans la fabrication d'un article composite, comprenant un polyamide (a) présentant une viscosité à l'état fondu allant de 50 à 2000 Pa.s,
ledit polyamide (b) présentant une viscosité en fondu inférieure à celle dudit polyamide (a) en fondu, allant de 1 à 20 Pa.s, et une masse moléculaire moyenne en nombre Mn, déterminée par chromatographie par perméation de gel (GPC), exprimée en masse absolue à partir de la totalité de la distribution de masses, inférieure à celle dudit polyamide (a),
ledit polyamide non évolutif demeurant inerte à l'état fondu, autrement dit n'étant pour l'essentiel pas sujet à un phénomène de polymérisation ni de condensation avec les autres composés de la composition thermoplastique, en particulier avec ledit polyamide (a), de sorte que la valeur de la viscosité stabilisée de la composition thermoplastique à l'état fondu varie au plus de 25 %, voire au plus de 20 %, de préférence au plus de 10 %, préférentiellement au plus de 5 %, plus préférentiellement au plus de 2 %, par rapport à sa valeur initiale, sur une durée d'au moins 15 minutes, à température et pression constantes sous atmosphère inerte ;
la viscosité à l'état fondu étant déterminée suivant le protocole décrit dans la description ;
ledit polyamide (b) présentant :
- une concentration en groupements terminaux amines (GTA) et/ou en groupements terminaux carboxyliques (GTC) inférieure ou égale à 20 meq/kg, ou
- une concentration en groupements terminaux amines (GTA) supérieure ou égale à 25 meq/kg ; une concentration en groupements terminaux acide (GTC) supérieure ou égale à 25 meq/kg ; et une concentration en groupements terminaux bloqués (GTB) supérieure ou égale à 25 meq/kg, telle que ledit polyamide (b) est non évolutif du fait de la présence desdits groupes terminaux bloqués
les concentrations en groupements terminaux amines (GTA) et en groupements terminaux carboxyliques (GTC) étant déterminées par dosage potentiométrique après complète dissolution du polyamide, par exemple dans le trifluoroéthanol, et ajout d'une base forte en excès, puis titrage des espèces basiques par une solution aqueuse d'acide fort ;
la concentration en groupements terminaux bloqués étant calculée par le rapport entre la quantité molaire de limiteur de chaîne ajoutée et la masse de polyamide produit ;
ladite composition comprenant de 70 à 95 % en poids de polyamide (a) et de 5 à 30 % en poids de polyamide (b), par rapport au poids total de ladite composition.

## Patentansprüche

1. Thermoplastische Zusammensetzung mit verbesserter Fließfähigkeit im schmelzflüssigen Zustand zum Imprägnieren eines Verstärkungsstoffs bei der Herstellung eines Verbundartikels, umfassend mindestens:
(a) ein Polyamid, das eine Viskosität im schmelzflüssigen Zustand aufweist, die von 50 bis 2000 Pa.s reicht, und
(b) ein sich nicht veränderndes Polyamid, das eine Viskosität in der Schmelze aufweist, die geringer als die des Polyamids (a) in der Schmelze ist und von 1 bis 20 Pa.s reicht, und mit einer zahlenmittleren Molekularmasse Mn, bestimmt durch Gelpermeationschromatographie (GPC), ausgedrückt als absolute Masse anhand der Gesamtheit der Massenverteilung, versehen ist, die geringer als die des Polyamids (a) ist,
wobei das sich nicht verändernde Polyamid im schmelzflüssigen Zustand inert bleibt, mit anderen Worten, im Wesentlichen weder einem Polymerisations- noch einem Kondensationsvorgang mit den anderen Verbindungen der thermoplastischen Zusammensetzung, insbesondere mit dem Polyamid (a), ausgesetzt ist, so dass der Wert der stabilisierten Viskosität der thermoplastischen Zusammensetzung im geschmolzenen Zustand höchstens um 25 %, ja sogar höchstens um 20 %, vorzugsweise höchstens um 10 %, bevorzugt höchstens um 5 %, noch bevorzugter höchstens um 2 % bezogen auf ihren Ausgangswert über eine Dauer von mindestens 15 Minuten, vorzugsweise mindestens 30 Minuten, bei konstanter Temperatur und konstantem Druck unter inerter Atmosphäre variiert,
wobei die Zusammensetzung eine Viskosität in der Schmelze aufweist, die bei einem geringeren Wert als die Viskosität in der Schmelze des Polyamids (a) stabilisiert ist, wobei die Viskosität im schmelzflüssigen Zustand gemäß dem in der Beschreibung beschriebenen Protokoll bestimmt wird,
wobei das Polyamid (b) aufweist:
- eine Konzentration an Amin-Endgruppen (GTA) und/oder an carboxylischen Endgruppen (GTC) kleiner als oder gleich 20 meq/kg oder
- eine Konzentration an Amin-Endgruppen (GTA) größer als oder gleich 25 meq/kg; eine Konzentration an Säureendgruppen (GTC) größer als oder gleich 25 meq/kg; und eine Konzentration an blockierten Endgruppen (GTB) größer als oder gleich 25 meq/kg, so dass sich das Polyamid (b) aufgrund des Vorhandenseins der blockierten Endgruppen nicht verändert;
- wobei die Konzentrationen an Amin-Endgruppen (GTA) und an carboxylischen Endgruppen (GTC) bestimmt werden durch potentiometrische Dosierung nach vollständiger Auflösung des Polyamids, beispielsweise in Trifluorethanol, und Zugabe einer starken Base im Überschuss, dann Titration der basischen Spezies durch eine wässrige Lösung einer starken Säure; wobei die Konzentration an blockierten Endgruppen durch das Verhältnis zwischen der zugegebenen molaren Kettenbegrenzermenge und der Masse des erzeugten Polyamids berechnet wird;
wobei die Zusammensetzung 70 bis 95 Gew.-% des Polyamids (a) und 5 bis 30 Gew.-% des Polyamids (b) bezogen auf das Gesamtgewicht der Zusammensetzung umfasst.

2. Zusammensetzung nach Anspruch 1, bei welcher der Gehalt an Polyamid (b) 5 und 20 Gew.-% und noch bevorzugter 5 bis 12 Gew.-% bezogen auf das Gesamtgewicht der Zusammensetzung beträgt.

3. Zusammensetzung nach einem der vorhergehenden Ansprüche, bei der die Polyamide (a) und (b) aus demselben Polyamid hervorgehen, wobei der Schmelzpunkt des Polyamids (b) vorzugsweise niedriger als oder gleich dem des Polyamids (a) ist.

4. Zusammensetzung nach einem der vorhergehenden Ansprüche, die eine Viskosität im schmelzflüssigen Zustand besitzt, die kleiner ist als 50 % der Viskosität im schmelzflüssigen Zustand des Polyamids (a), vorzugsweise kleiner ist als 30 % der Viskosität im schmelzflüssigen Zustand des Polyamids (a), insbesondere kleiner ist als 25 % der Viskosität im schmelzflüssigen Zustand des Polyamids (a).

5. Zusammensetzung nach einem der vorhergehenden Ansprüche, die eine Viskosität in Schmelze besitzt, die sich um höchstens 25 %, ja sogar um höchstens 20 %, vorzugsweise um höchstens 10 %, bevorzugt um höchstens 5 %, noch bevorzugter um höchstens 2 %, vorteilhafterweise um höchstens 1 % bezogen auf ihren Ausgangswert über eine Dauer von mindestens 15 Minuten, vorzugsweise mindestens 30 Minuten, bei konstanter Temperatur und konstantem Druck unter inerter Atmosphäre, beispielsweise unter Stickstoff, verändert und insbesondere zunimmt.

6. Zusammensetzung nach einem der vorhergehenden Ansprüche, bei der das Polyamid (b) eine Konzentration an Amin-Endgruppen (GTA) und/oder an carboxylischen Endgruppen (GTC) kleiner als oder gleich 15 meq/kg, insbesondere kleiner als oder gleich 10 meq/kg, noch bevorzugter kleiner als oder gleich 5 meq/kg, ganz besonders von 0 meq/kg aufweist.

7. Zusammensetzung nach einem der vorhergehenden Ansprüche, bei der das Polyamid (b) eine zahlenmittlere Molekularmasse Mn, bestimmt durch Gelpermeationschromatographie (GPC), zwischen 5000 und 8500 g/mol aufweist.

8. Zusammensetzung nach einem der vorhergehenden Ansprüche, bei der das Polyamid (a) eine Viskosität im schmelzflüssigen Zustand aufweist, die von 60 bis 800 Pa.s reicht.

9. Zusammensetzung nach einem der vorhergehenden Ansprüche, bei der die Polyamide (a) und (b) unabhängig voneinander unter den Polyamiden gewählt sind, die aus der Polykondensation mindestens einer aliphatischen Dicarbonsäure mit einem aliphatischen oder zyklischen Diamin hervorgegangen sind, den Polyamiden durch Polykondensation mindestens einer aromatischen Dicarbonsäure und eines aliphatischen oder aromatischen Diamins, den Polyamiden, die durch Polykondensation mindestens einer Aminosäure oder eines Lactams mit sich selbst erhalten werden, oder ihren Mischungen und (Co)polyamiden, und die Polyamide (a) und (b) vorzugsweise unabhängig voneinander unter den Familien mit den Bezeichnungen PA 66, PA 6.10, PA 6.12, PA 12.12, PA 4.6, MXD 6, PA 6, PA 7, PA 9T, PA 10T, PA 11, PA 12, PA 6T/6I, PA 6T/6I/66, den daraus hervorgegangenen Copolyamiden und ihren Mischungen gewählt sind.

10. Zusammensetzung nach einem der vorhergehenden Ansprüche, wobei die Polyamide (a) und (b) unabhängig voneinander hydroxyaromatische Struktureinheiten umfassen, die chemisch an die Kette des Polyamids gebunden sind.

11. Verfahren zur Herstellung eines Verbundartikels, das mindestens einen Schritt des Imprägnierens eines Verstärkungsstoffs mit einer Zusammensetzung nach einem der Ansprüche 1 bis 10 im schmelzflüssigen Zustand umfasst.

12. Verbundartikel, der mit dem Verfahren nach Anspruch 11 erhalten wird.

13. Verwendung eines sich nicht verändernden Polyamids (b) als verflüssigenden Zusatzstoff in einer Zusammensetzung im schmelzflüssigen Zustand zum Imprägnieren eines Verstärkungsstoffs bei der Herstellung eines Verbundartikels, umfassend ein Polyamid (a), das eine Viskosität im schmelzflüssigen Zustand aufweist, die von 50 bis 2000 Pa.s reicht, wobei das Polyamid (b) eine Viskosität in der Schmelze aufweist, die geringer als die des Polyamids (a) in der Schmelze ist und von 1 bis 20 Pa.s reicht, und eine zahlenmittlere Molekularmasse Mn, bestimmt durch Gelpermeationschromatographie (GPC), ausgedrückt als absolute Masse anhand der Gesamtheit der Massenverteilung, die geringer als die des Polyamids (a) ist,
wobei das sich nicht verändernde Polyamid im schmelzflüssigen Zustand inert bleibt, mit anderen Worten, im Wesentlichen weder einem Polymerisations- noch einem Kondensationsvorgang mit den anderen Verbindungen der Zusammensetzung, insbesondere mit dem Polyamid (a), ausgesetzt ist, so dass der Wert der stabilisierten Viskosität der thermoplastischen Zusammensetzung im schmelzflüssigen Zustand höchstens um 25 %, ja sogar höchstens um 20 %, vorzugsweise höchstens um 10 %, bevorzugt höchstens um 5 %, noch bevorzugter höchstens um 2 % bezogen auf ihren Ausgangswert über eine Dauer von mindestens 15 Minuten bei konstanter Temperatur und konstantem Druck unter inerter Atmosphäre variiert; wobei die Viskosität im schmelzflüssigen Zustand gemäß dem in der Beschreibung beschriebenen Protokoll bestimmt wird;
wobei das Polyamid (b) aufweist:
- eine Konzentration an Amin-Endgruppen (GTA) und/oder an carboxylischen Endgruppen (GTC) kleiner als oder gleich 20 meq/kg oder
- eine Konzentration an Amin-Endgruppen (GTA) größer oder gleich 25 meq/kg; eine Konzentration an Säureendgruppen (GTC) größer als oder gleich 25 meq/kg;
und eine Konzentration an blockierten Endgruppen (GTB) größer oder gleich 25 meq/kg, so dass das Polyamid (b) sich aufgrund des Vorhandenseins der blockierten Endgruppen nicht verändert
wobei die Konzentrationen an Amin-Endgruppen (GTA) und an carboxylischen Endgruppen (GTC) bestimmt werden durch potentiometrische Dosierung nach vollständiger Auflösung des Polyamids, beispielsweise in Trifluorethanol, und Zugabe einer starken Base im Überschuss, dann Titration der basischen Spezies durch eine wässrige Lösung einer starken Säure;
wobei die Konzentration an blockierten Endgruppen durch das Verhältnis zwischen der zugegebenen molaren Kettenbegrenzermenge und der Masse des erzeugten Polyamids berechnet wird;
wobei die Zusammensetzung 70 bis 95 Gew.-% des Polyamids (a) und 5 bis 30 Gew.-% des Polyamids (b) bezogen auf das Gesamtgewicht der Zusammensetzung umfasst.

## Claims

1. Thermoplastic composition having improved fluidity in the molten state, useful for the impregnation of a reinforcing fabric in the manufacture of a composite article, comprising at least:
(a) a polyamide having a melt viscosity ranging from 50 to 2000 Pa.s, and
(b) a non-evolutive polyamide having a melt viscosity lower than the melt viscosity of said polyamide (a), ranging from 1 to 20 Pa.s, and having a number-average molecular mass Mn, determined by gel permeation chromatography (GPC) and expressed in absolute mass based on the totality of the distribution of masses, lower than that of said polyamide (a),
said non-evolutive polyamide remaining inert in the molten state, in other words essentially not being subject to a phenomenon of polymerization or condensation with the other compounds of the thermoplastic composition, in particular with said polyamide (a), such that the stabilized viscosity value for the thermoplastic composition in the molten state varies at most by 25%, or even at most by 20%, preferably at most by 10%, preferentially at most by 50, more preferentially at most by 2%, relative to its initial value, over a duration of at least 15 minutes, preferably at least 30 minutes, at constant temperature and pressure under an inert atmosphere;
said composition having a melt viscosity, stabilized at a value lower than the melt viscosity of said polyamide (a), the melt viscosity being determined according to the protocol described in the description,
said polyamide (b) having:
- a concentration of amine end groups (AEGs) and/or of carboxylic end groups (CEGs) of less than or equal to 20 meq/kg, or
- a concentration of amine end groups (AEGs) of greater than or equal to 25 meq/kg; a concentration of acid end groups (CEGs) of greater than or equal to 25 meq/kg; and a concentration of blocked end groups (BEGs) of greater than or equal to 25 meq/kg, such that said polyamide (b) is non-evolutive due to the presence of said blocked end groups;
- the concentrations of amine end groups (AEGs) and of carboxylic end groups (CEGs) being determined by potentiometric assay after complete dissolution of the polyamide, for example in trifluoroethanol, and addition of a strong base in excess, then titration of the basic species with an aqueous solution of strong acid; the concentration of blocked end groups being calculated by the ratio between the molar amount of chain limiter added and the mass of polyamide produced;
said composition comprising from 70% to 95% by weight of polyamide (a) and from 5% to 30% by weight of polyamide (b), relative to the total weight of the composition.

2. Composition according to Claim 1, in which the content of polyamide (b) is from 5% to 20% by weight, and more preferentially from 5% to 12% by weight, relative to the total weight of the composition.

3. Composition according to either one of the preceding claims, in which the polyamides (a) and (b) are derived from the same polyamide, the melting point of the polyamide (b) preferably being less than or equal to that of the polyamide (a).

4. Composition according to any one of the preceding claims, having a melt viscosity of less than 500 of the melt viscosity of said polyamide (a), preferably less than 300 of the melt viscosity of said polyamide (a), in particular less than 250 of the melt viscosity of said polyamide(a).

5. Composition according to any one of the preceding claims, having a melt viscosity which changes, and in particular increases, at most by 25%, or even at most by 20%, preferably at most by 10%, preferentially at most by 50, more preferentially at most by 20, advantageously at most by 1%, relative to its initial value, over a duration of at least 15 minutes, preferably at least 30 minutes, at constant temperature and pressure under an inert atmosphere, for example under nitrogen.

6. Composition according to any one of the preceding claims, in which said polyamide (b) has a concentration of amine end groups (AEGs) and/or of carboxylic end groups (CEGs) of less than or equal to 15 meq/kg, in particular less than or equal to 10 meq/kg, even more preferentially less than or equal to 5 meq/kg, very particularly equal to 0 meq/kg.

7. Composition according to any one of the preceding claims, said polyamide (b) having a number-average molecular mass Mn, determined by gel permeation chromatography (GPC), of between 5000 and 8500 g/mol.

8. Composition according to any one of the preceding claims, said polyamide (a) having a melt viscosity ranging from 60 to 800 Pa.s.

9. Composition according to any one of the preceding claims, in which said polyamides (a) and (b) are chosen independently of one another from the polyamides derived from the polycondensation of at least one aliphatic dicarboxylic acid with an aliphatic or cyclic diamine, the polyamides obtained by polycondensation of at least one aromatic dicarboxylic acid and an aliphatic or aromatic diamine, the polyamides obtained by polycondensation of at least one amino acid or lactam with itself, or their mixtures and (co)polyamides, and preferably said polyamides (a) and (b) are chosen independently of one another from the families with the references PA 66, PA 6.10, PA 6.12, PA 12.12, PA 4.6, MXD 6, PA 6, PA 7, PA 9T, PA 10T, PA 11, PA 12, PA 6T/6I, PA 6T/6I/66, copolyamides derived therefrom, and mixtures thereof.

10. Composition according to any one of the preceding claims, said polyamides (a) and (b) independently of one another comprising hydroxyaromatic units chemically bonded to the chain of the polyamide.

11. Process for manufacturing a composite article comprising at least one step of impregnating a reinforcing fabric with a composition according to any one of claims 1 to 10 in the molten state.

12. Composite article obtained by the process according to Claim 11.

13. Use of a non-evolutive polyamide (b), as plasticizing additive in a composition in the molten state useful for the impregnation of a reinforcing fabric in the manufacture of a composite article, comprising a polyamide (a) having a melt viscosity ranging from 50 to 2000 Pa.s,
said polyamide (b) having a melt viscosity lower than the melt viscosity of said polyamide (a), ranging from 1 to 20 Pa.s, and a number-average molecular mass Mn, determined by gel permeation chromatography (GPC) and expressed in absolute mass based on the totality of the distribution of masses, lower than that of said polyamide (a),
said non-evolutive polyamide remaining inert in the molten state, in other words essentially not being subject to a phenomenon of polymerization or condensation with the other compounds of the thermoplastic composition, in particular with said polyamide (a), such that the stabilized viscosity value for the thermoplastic composition in the molten state varies at most by 25%, or even at most by 20%, preferably at most by 10%, preferentially at most by 50, more preferentially at most by 2%, relative to its initial value, over a duration of at least 15 minutes, at constant temperature and pressure under an inert atmosphere;
the melt viscosity being determined according to the protocol described in the description,
said polyamide (b) having:
- a concentration of amine end groups (AEGs) and/or of carboxylic end groups (CEGs) of less than or equal to 20 meq/kg, or
- a concentration of amine end groups (AEGs) of greater than or equal to 25 meq/kg; a concentration of acid end groups (CEGs) of greater than or equal to 25 meq/kg; and a concentration of blocked end groups (BEGs) of greater than or equal to 25 meq/kg, such that said polyamide (b) is non-evolutive due to the presence of said blocked end groups;
the concentrations of amine end groups (AEGs) and of carboxylic end groups (CEGs) being determined by potentiometric assay after complete dissolution of the polyamide, for example in trifluoroethanol, and addition of a strong base in excess, then titration of the basic species with an aqueous solution of strong acid;
the concentration of blocked end groups being calculated by the ratio between the molar amount of chain limiter added and the mass of polyamide produced;
said composition comprising from 70% to 95% by weight of polyamide (a) and from 5% to 30% by weight of polyamide (b), relative to the total weight of said composition.
